# EUROPÄISCHE PATENTANMELDUNG

(11) **EP 2 977 141 A1**
(43) Veröffentlichungstag der Anmeldung: **27.01.2016**
(21) Anmeldenummer: 15176987.4
(22) Anmeldetag: 16.07.2015
(51) Int. Cl.: B23K 35/38, B23K 9/16

(54) **SCHUTZGAS FÜR EIN SCHWEISSVERFAHREN**

(30) Priorität: 25.07.2014 DE 102014110539; 21.11.2014 DE 102014117073
(71) Anmelder: WESTFALEN AG, 48155 Münster (DE)
(72) Erfinder: SCHNEIDER, Michael, 48231 Warendorf (DE); HOHMANN, Klaus, 48308 Senden (DE); THUME, Matthias, 48145 Münster (DE); JENTER, Ulf, 47058 Duisburg (DE)
(74) Vertreter: Patentanwälte und Rechtsanwalt Weiß, Arat & Partner mbB

(57) **Zusammenfassung**

Bei einem Schutzgas für ein Schweißverfahren, insbesondere zum WIG-Schweißen, aus Argon oder einem Gemisch aus Argon und Helium mit einer Beimischung aus Kohlendioxid und/oder Sauerstoff, soll die Kohlendioxid- und/oder Sauerstoffbeimischung mehr als 0,10 Vol% betragen.

## Beschreibung

Die Erfindung betrifft ein Schutzgas für ein Schweissverfahren, insbesondere zum WIG-Schweissen, aus Argon oder einem Gemisch aus Argon und Helium mit einer Beimischung aus Kohlendioxid und/oder Sauerstoff.

### Stand der Technik

Es sind eine Vielzahl von Schweissverfahren bekannt. Die vorliegende Erfindung bezieht sich vor allem auf das Schutzgasschweissverfahren. Speziell für das MAG-Schweissen (Metallschweissen mit aktiven also reaktionsfähigen Gasen) ist ein Schutzgas unter der Marke SAGOX HC auf dem Markt. Dieses bündelt die Eigenschaft von vier verschiedenen Komponenten, um speziell bei Keilnähten ein optimales Schweissergebnis zu erzielen. Das Schutzgas ist Argon basiert und beinhaltet exakt aufeinander abgestimmte Beimischungen von Helium, Wasserstoff und Kohlendioxid. Die gezielte Zugabe von Wasserstoff gleicht die nachteilige Wirkung von Kohlendioxid auf das Fliessverhalten aus. Die geringe Kohlendioxidbeimischung minimiert die Oxidation an der Naht, so dass beim Mehrlagenschweissen eine Zwischenreinigung der einzelnen Lagen nicht mehr erforderlich ist. Der Helium-Anteil steigert die Wärmeleitfähigkeit und sorgt so für ein gutes Benetzungsverhalten.

Die vorliegende Erfindung bezieht sich insbesondere auf das Wolfram-Intertgasschweissverfahren. Eine entsprechende Schweissanlage besteht üblicherweise aus einer Stromquelle, die in den meisten Fällen auf Gleich- oder Wechselstromschweissen geschaltet werden kann, und einem Schweissbrenner, der mit der Stromquelle durch ein Schlauchpaket verbunden ist. Im Schlauchpaket befindet sich die Schweissstromleitung, die Schutzgasführung, die Steuerleitung und bei grösseren Brennern der Zu- und Rücklauf von Kühlwasser.

Meist wird zum Schweissen das Edelgas Argon eingesetzt, seltener Helium oder ein Gemisch aus beiden Gasen. Das Schutzgas wird durch eine Gasdüse zur Schweissstelle geleitet.

Wie der Name schon sagt, können zum Wolfram-Inertgas-Schweissen nur inerte Gase eingesetzt werden, da sonst die Wolfram-Elektrode beschädigt wird.

Aus der DE 24 51 591 A1 ist ein Gasgemisch zum Plasmaschweissen oder Schweissen bei anderen Schweissverfahren mit nicht abschmelzbarer Wolfram-Elektrode bekannt, das neben Argon und/oder Helium zu 0,1 bis 1,0 Vol% aus Wasserstoff besteht. Der Wasserstoff soll die Oxidbildung an der Wolfram-Elektrode verhindern.

Aus der EP 0 544 178 A1 ist wiederum ein Verfahren zum Schutzgas-Lichtbogen-Schweissen von hochlegierten korrosionsbeständigen Stählen, insbesondere von Nickel- und Sonderstählen mit einem Schutzgas bekannt, das neben Argon und/oder Helium ein Anteil an Kohlendioxid, an Sauerstoff oder an einer Mischung von Kohlendioxid und Sauerstoff von 0,01 bis 0,5 Vol% (100 bis 5.000 vpm) enthält.

Des weiteren ist aus der EP 0 639 427 B1 ein Schutzgas zum Lichtbogenschweissen unterschiedlichster Werkstoffe bekannt, wobei sich das Schutzgas zu wesentlichen Teilen aus Argon oder einem Gemisch aus Argon und Helium zusammensetzt und wobei dieses eine Beimischung von 50 bis 1.000 vpm (0,005 bis 0,10 Vol%) Kohlendioxid und/oder Sauerstoff aufweist, wobei das Schutzgas in einem Anteilsbereich von 0,5 bis 4 Vol% Wasserstoff enthält. Hierdurch soll vor allem die Stabilität des Schweissverfahrens gesteigert werden.

### Aufgabe

Aufgabe der vorliegenden Erfindung ist es, ein Schutzgas bereitzustellen, welches zwar auch die Stabilität der Schweissnaht erhöht, aber auch einen tieferen Einbrand gewährleistet.

### Lösung der Aufgabe

Zur Lösung der Aufgabe führt, dass die Kohlendioxid- und/oder Sauerstoffbeimischung mehr als 0,10 Vol% beträgt. Besonders bevorzugt wird eine Kohlendioxidbeimischung von 0,6 bis 2 Vol%, bevorzugt von 0,8 Vol%.

Wird das im Stand der Technik genannte Schutzgas SAGOX HC, das für das MAG-Schweissen von hochlegierten Stellen entwickelt wurde, beim WIG-Schweissen angewendet, so ergibt sich hier ein interessanter Effekt. Insbesondere bei niedrig gekohlten hochlegierten Stählen treten durch den sogenannten Mahangoni-Effekt beim Schweissen Probleme auf. Durch den niedrigen Kohlenstoffgehalt, der günstig ist, ist auch der Schwefel-Gehalt im Stahl soweit reduziert, dass sich die Rotation der Schmelze umdreht, die Schweissnaht breiter wird und der Einbrand zurückgeht. Dieser Effekt führt allerdings dazu, dass solche Stähle nur erschwert mechanisiert geschweisst werden können. Durch die Verwendung von Kohlendioxid und/oder Sauerstoff im Schutzgas im oben genannten erfindungsgemäßen Bereich wird dieser Effekt reduziert und ein sicherer Einbrand gewährleistet. Das bedeutet aber weit mehr als nur die Stabilität zu erhöhen.

In einem weiterhin bevorzugten Ausführungsbeispiel soll dem Schutzgas noch Wasserstoff zugemischt werden, bevorzugt in einer Menge von 0,5 bis 10 Vol%.

Weiterhin bevorzugt wird, dass der Anteil an Helium, sofern ein Gemisch aus Argon und Helium verwendet wird, 1 bis 30 Vol% beträgt.

Von der vorliegenden Erfindung wird natürlich auch die Verwendung eines derartigen erfindungsgemässen Schutzgases für ein Schweissverfahren und hier vor allem für das WIG-Schweissen beansprucht.

## Patentansprüche

1. Schutzgas für ein Schweißverfahren, insbesondere zum WIG-Schweißen, aus Argon oder einem Gemisch aus Argon und Helium mit einer Beimischung aus Kohlendioxid und/oder Sauerstoff,
**dadurch gekennzeichnet,**
**dass** die Kohlendioxid- und/oder Sauerstoffbeimischung mehr als 0,10 Vol% beträgt.

2. Schutzgas nach Anspruch 1, **dadurch gekennzeichnet, dass** die Kohlendioxid- und/oder Sauerstoffbeimischung 0,6-2,0 Vol%, bevorzugt 0,8 Vol%, beträgt.

3. Schutzgas nach Anspruch 1 oder 2, **dadurch gekennzeichnet, dass** Wasserstoff zugemischt wird.

4. Schutzgas nach Anspruch 2, **dadurch gekennzeichnet, dass** die zu Mischung an Wasserstoff 0,5-10 Vol% beträgt.

5. Schutzgas nach wenigstens einem der vorhergehenden Ansprüche, **dadurch gekennzeichnet, dass** der Anteil an Helium 1-30 Vol% beträgt.

6. Verwendung eines Schutzgases nach wenigstens einem der vorhergehenden Ansprüche für ein Schweißverfahren, insbesondere zum WIG-Schweißen.
